# EUROPÄISCHE PATENTANMELDUNG

(11) **EP 2 770 427 A1**
(43) Veröffentlichungstag der Anmeldung: **27.08.2014**
(21) Anmeldenummer: 14155882.5
(22) Anmeldetag: 20.02.2014
(51) Int. Cl.: G06F 3/14, H04L 29/06, G09G 5/12

(54) **Verfahren und System zum synchronisierten Anzeigen**

(30) Priorität: 22.02.2013 AT 501172013
(71) Anmelder: EMPORIA TELECOM Produktions- und Vertriebs-GmbH & Co.KG., 4020 Linz (AT)
(72) Erfinder: Rabenstein, Michael, 1220 Wien (AT)
(74) Vertreter: Burger, Hannes

(57) **Zusammenfassung**

Die Erfindung betrifft ein Verfahren zum synchronisierten Anzeigen eines Bildes, einer Bildfolge oder mehrerer Bilder hintereinander auf dem Display (11) eines ersten Clients (1) und auf dem Display (12) eines zweiten Clients (2), wobei zumindest der zweite Client (2) ein mobiler Client ist und der erste Client (1) und der zweite Client (2) über eine Datenverbindung (3), die eine Funkübertragungsstrecke zum zweiten Client (2) umfasst, miteinander kommunizieren. Die Bilddaten können im voraus vom ersten Client (1) über einen Server (4) zum zweiten Client (2) übertragen werden. Die Synchronisation wird mit Hilfe einer Triggerinformation (5) durch den ersten Client (1) und einer Bestätigungsinformation (6) durch den zweiten Client (2) erreicht. Die Erfindung bezieht sich auch auf ein System zum synchronisierten Anzeigen eines Bildes, einer Bildfolge oder mehrerer Bilder hintereinander auf dem Display (11) eines ersten Clients (1) und auf dem Display (12) eines zweiten Clients (2) sowie auf einen mobilen Client und auf einen Client.

## Beschreibung

Die Erfindung betrifft ein Verfahren und ein System zum synchronisierten Anzeigen eines Bildes, einer Bildfolge oder mehrerer Bilder hintereinander auf dem Display eines ersten Clients und auf dem Display eines zweiten Clients, wobei zumindest der zweite Client ein mobiler Client ist und der erste Client und der zweite Client über eine Datenverbindung, die eine Funkübertragungsstrecke zum zweiten Client umfasst, miteinander kommunizieren. Die Erfindung betrifft auch einen Client und einen mobilen Client.

Die EP1592198A1 offenbart ein System, mit dem ein Sharing von Präsentationsdaten (z.B. slides oder PowerPoint) zwischen Datenclients ermöglicht wird. Dabei wird eine Präsentation zwischen Datenclients ausgetauscht. Der Präsentator kann durch dieses System eine synchronisierte Abfolge der Präsentation bewirken z.B. mittels eines Master "Sync" Icons. Der empfangende Datenclient kann z.B. ein Mobiltelefon sein.

Die WO2008005340A2 offenbart ein Online Conferencing System for Sharing Documents. Dabei erfolgt ein Übertragen von elektronischen Konferenzunterlagen an Teilnehmer der Konferenz. Durch Navigationsinstruktionen wird nun ein synchronisiertes Betrachten der Unterlagen durch die Teilnehmer ermöglicht.

Die CN102523262A offenbart ein Mobiltelefon und ein Verfahren zum sofortigen Sharing von Bildern, die mit dem Mobiltelefon aufgenommen werden. Dabei kommuniziert das Mobiltelefon mit einem Server solcherart, dass eine Verbindung mit dem Server hergestellt wird, wenn ein Öffnungsbefehl des Bildaufnahmemoduls empfangen wird. Anschließend erfolgt ein automatisches Empfangen und Senden der Bilddaten zum Server. Ein gleichzeitiges Betrachten von Bildern wird durch dieses Verfahren nicht ermöglicht. Vielmehr geht es darum, ein aufgenommenes Bild sofort an den Server weiterzuleiten, wo es dann für andere Nutzer zur Verfügung steht.

Die DE 10 2006 012681 A1 offenbart ein Verfahren zur Abwicklung eines Datentransfers im Zusammenhang mit der Erhebung und Auswertung von Messdaten. Dies kann unter Zuhilfenahme eines Handys erfolgen, das mit einem Server kommuniziert.

Die DE 10 2008 002276 A1 offenbart ein Verfahren und eine Anordnung zur Übertragung von Bilddaten, welches dazu vorgesehen ist in der Fernsehproduktion zur zeitnahen Einbettung von Handy-Bildmaterial in Fernsehprogramme zu dienen. Ein Gemeinsames Betrachten von Bildern durch zwei verschiedene Clients ist dieser Druckschrift nicht zu entnehmen.

Die EP1708505B1 offenbart ein Verfahren zum Verteilen von Massenmedien-Content an zumindest einen Nutzer. Dabei wird ein Content an ein Nutzergerät übertragen, um für den Nutzer reproduziert zu werden. In einem Abgleichschritt wird festgestellt, welcher Content auf den Massenmedium-Content bezogen ist, Information, welche für den Massenmedium-Content beschreibend ist und Daten, welche auf den Nutzer bezogen sind. Ein gemeinsames Betrachten von Bildern ist in dieser Druckschrift nicht offenbart.

Die WO 2012 135489 A1 offenbart ein Verfahren zum Verändern eines Inhaltes in einem mobile device über eine netzwerkbasierte Applikation. Dabei wird über ein Netzwerk an einem Server Information, die den Inhalt von dem mobile device beschreibt, empfangen. Diese Information wird zu einem client computer gesendet und dort einem Nutzer präsentiert, indem eine grafische Darstellung des device angezeigt wird. Die grafische Darstellung des Inhaltes ist dabei derart, wie sie auf dem Display des Gerätes erscheinen würde. Über einen request wird eine Veränderung des Inhaltes durch den Nutzer der netzwerkbasierten Applikation beantragt. Dieser request für Veränderungen wird zum device gesendet.

Die US 2005 231637A1 offenbart ein Verfahren zum Anzeigen eines Bildes in einem elektronischen Medium. Diese Druckschrift offenbart ein Triggersignal, mit dem der Beginn eines neu anzuzeigenden Bildes angezeigt wird. Eine Kommunikation über Clients, wie auch gemeinsames Betrachten von Bildern ist dieser Druckschrift nicht zu entnehmen.

Der Nachteil der im Stand der Technik bekannten Lösungen zum synchronisierten Anzeigen von Bildern besteht darin, dass der Nutzer, der die Bilder herzeigen bzw. präsentieren möchte, nicht sicher sein kann, dass ein bestimmtes Bild zu einer bestimmten Zeit auf dem Display des mit ihm kommunizierenden Clients auch tatsächlich angezeigt wird. Wenn nun jemand seine Fotos mit jemandem anderen gleichzeitig teilen und gleichzeitig auch darüber sprechen möchte, kann es nun vorkommen, dass die Fotos noch nicht auf beiden Clients gleichzeitig angezeigt sind. Der Nutzer beginnt bereits das Foto zu erklären, ohne dass dieses auf dem Client des anderen Nutzers angezeigt wird. Dies ist insbesondere dann der Fall, wenn die Bilder erst übertragen werden müssen und wenn aufgrund der Größe der Bilddaten bzw. zu geringer Bandbreite die Übertragung nennenswerte Zeit in Anspruch nimmt.

Die Erfindung setzt sich zum Ziel, diese Probleme zu lösen und ein Verfahren und ein System bereitzustellen, mit dem nicht nur ein synchronisiertes (d.h. möglichst gleichzeitiges) Anzeigen von Bildern oder Bildfolgen auf zwei physisch voneinander getrennten Clients sichergestellt ist, sondern mit dem auch jener Nutzer, der das Öffnen der Bilder bewirkt und der diese gegebenenfalls dem anderen Nutzer erklären möchte, zuverlässig informiert ist, ob bzw. wann das Bild nun auch auf dem Client des anderen Nutzers ersichtlich ist. Die Information darüber, dass der andere Nutzer das Bild nun auf der Anzeige seines Clients sehen kann, soll auf besonders einfache, elegante und subtile Weise erfolgen.

Dieses Ziel wird mit einem Verfahren der eingangs genannten Art erreicht durch die Schritte:
a) Generieren einer Triggerinformation durch den ersten Client infolge einer Betätigung einer Eingabe-Schnittstelle des ersten Clients durch einen Nutzer (z.B. durch Auswählen oder Anklicken des gewünschten Bildes z.B. aus einem Dateiordner oder Album) und Senden der Triggerinformation über die Datenverbindung zum zweiten Client,
b) Empfangen der Triggerinformation durch den zweiten Client, wobei die Triggerinformation das Anzeigen (d.h. Öffnen) oder eine Veränderung der Anzei-geeigenschaften eines Bildes oder einer Bildfolge auf dem Display des zweiten Clients auslöst (dabei handelt es sich um jenes Bild oder jene Bildfolge, das/die der Nutzer des ersten Clients ausgewählt bzw. angeklickst hat),
c) nach dem Empfangen der Triggerinformation durch den zweiten Client, vorzugsweise sobald das Bild oder die Bildfolge auf dem Display des zweiten Clients angezeigt wird oder dessen/deren Anzeigeeigenschaften verändert wurden: automatisches Senden einer vom zweiten Client generierten Bestätigungsinformation zum ersten Client,
d) Empfangen der Bestätigungsinformation durch den ersten Client, wobei die Bestätigungsinformation durch den ersten Client in eine optische und/oder akustische und/oder taktile Information umgewandelt wird.

Die Erfindung eröffnet die Möglichkeit eines gleichzeitigen Betrachtens derselben Bilder auf zwei, physisch voneinander getrennten, insbesondere mobilen Clients, z.B. Mobiltelefonen, Smartphones, Tablett-PCs, PDAs od.dgl.), über eine Funkverbindungsstrecke (Mobilfunknetz) unter Vermittlung einer (Server-)Datenverbindung.

Der Begriff Bild bzw. Bildfolge wird im Zusammenhang mit dessen/deren Inhalt verstanden. D.h. wenn von demselben Bild bzw. derselben Bildfolge die Rede ist, bezieht sich dies auf denselben Inhalt, d.h. dieselbe dargestellte Szenerie. Es ist nämlich durchaus möglich, dass die Bilddaten, aus denen die Bilder beiderorts geöffnet werden, nicht identisch sind. Z.B. ist es denkbar, dass die Bilder auf einem der Clients in ursprünglicher Dateigröße verbleiben und auf dem anderen Client komprimiert bzw. für die Übertragung bzw. Anzeige optimiert wurden. Der Ausdruck "dieselben Bilder" umfasst somit auch Bilder, deren Bilddaten nicht identisch sind, aber die aus einem gemeinsamen Bilddatensatz (Ursprungsdaten) stammen bzw. hervorgegangen sind. Unter "dieselben Bilder" bzw. "dieselbe Bildfolge" werden sowohl Bilder bzw. Bildfolgen mit identischen Bilddaten, als auch Bilder bzw. Bildfolgen mit unterschiedlichen Bilddaten, die jedoch auf einen gemeinsamen (Original-)Bilddatensatz zurückzuführen sind, verstanden.

Vor dem eigentlichen Betrachten ist es bevorzugt, wenn die gemeinsam zu betrachtenden Bilder auf beiden Clients lokal abgespeichert sind/werden, insbesondere durch Upload/Download von einem Server. Wenn die Bilder oder die Bildfolge vom ersten Client aufgenommen werden, ist eine Übermittlung (z.B. via den Server) zum zweiten Client erforderlich.

Im synchronisierten Betrachtungsmodus bewirkt der erste Client (Betätigung durch den ersten Nutzer) durch Übermittlung eines Triggersignals das Öffnen der Bilder auf dem zweiten Client. Alternativ, z.B. wenn auf dem Display des zweiten Client der Ordner und die darin enthaltenen Ordnerelemente (Bilddaten) bereits als verkleinerte oder Miniatur-Ansichten angezeigt werden, kann das Triggersignal eine Veränderung der Anzeigeeigenschaften des synchron anzuzeigenden Bildes oder Bildfolge auslösen, insbesondere eine Vergrößerung der Miniaturansicht auf volle Bildschirmgröße.

Nach dem Empfangen des Triggersignals durch den zweiten Client, vorzugsweise sobald das Bild auf dem zweiten Client geöffnet ist (d.h. am Display angezeigt wird), sendet der zweite Client automatisch ein Bestätigungssignal zum ersten Client. Die Triggerinformation und Bestätigungsinformation können bei Verwendung eines Übertragungsprotokolls im Zusammenhang mit der Datenverbindung in Form von Befehlen ausgebildet sein, z.B. XMPP-Befehlen. Die Triggerinformation und Bestätigungsinformation laufen gegebenenfalls über den Server der Datenverbindung und werden von diesem (gegebenenfalls verschlüsselt und/oder in eine andere (Protokoll-)Sprache übersetzt und/oder komprimiert) an den jeweiligen anderen Client weitergeleitet.

Der Empfang des Bestätigungssignals des zweiten Clients durch den ersten Cli-ent bewirkt, dass der Nutzer des ersten Clients durch eine optische, akustische oder taktile Anzeige oder Veränderung darüber informiert wird, dass das Triggersignal beim zweiten Client ordnungsgemäß angekommen ist bzw. das entsprechende Bild auf dem Display des zweiten Clients angezeigt wird.

Durch die Erfindung soll eine tatsächlich zeitgleiche Betrachtung von Bildern ermöglicht werden, wobei Verzögerungen, die ansonsten durch Übertragung des Bildmaterials verursacht werden, verhindert werden. Während der Betrachtung muss also lediglich ein Triggersignal übertragen werden, das gegebenenfalls eine Identifikationskennung (UID - unique ID) beinhaltet, um das entsprechende Bild zu erkennen bzw. anzusprechen. Erst durch das Bestätigungssignal und die Umwandlung in eine durch den Nutzer (mit seinen Sinnen) registrierbare optische, akustische oder taktile Information (z.B. Öffnen, Vergrößern, Scharfstellen und/oder Aufhellen des Bildes auf dem ersten Client) wird auf zuverlässige und elegante Weise garantiert bzw. darüber (implizit) informiert, dass nun beide Clients (zeitgleich) dasselbe Bild anzeigen.

Die Erfindung ermöglicht es dem Nutzer des ersten Clients volle Kontrolle über den Ablauf des gemeinsamen Bilderbetrachtens auszuüben. Die technische Moderation des gemeinsamen Erlebnisses mit dem Nutzer des zweiten Clients obliegt im Wesentlichen dem Nutzer des ersten Clients. Dadurch kann sich der andere Nutzer vollauf auf die Bilder und die begleitenden Erläuterungen (über eine Gesprächsverbindung über das Telefonnetz) konzentrieren.

Ein Anwendungsgebiet der Erfindung besteht nämlich darin, auch älteren, mit den modernen Kommunikationsmethoden weniger vertrauten Person (z.B. Senioren, Großeltern) zu ermöglichen, verstärkt an der digitalen Kommunikation teilzunehmen. Dabei können den älteren Personen digitale Inhalte wie Bilder, Fotos, gegebenenfalls auch Videos durch Steuerung durch jüngere Personen (z.B. Kinder, Enkel, etc) zugänglich gemacht werden, ohne dass sich die älteren Personen mit der dahinterliegenden Technik auseinandersetzen müssen. Der jüngere Teilnehmer löst das Öffnen eines Bildes, einer Bildfolge oder mehrerer Bilder hintereinander auf dem Client der älteren Person aus. Die ältere Person braucht als passiver Betrachter nichts zu unternehmen.

Selbstverständlich eignet sich dieses Verfahren nicht nur für ältere Personen. Überall dort, wo Inhalte mit anderen Personen gleichzeitig geteilt werden sollen, kann dieses Verfahren angewandt werden.

An dieser Stelle sei auch bemerkt, dass die erfindungsgemäße Kommunikation nicht auf zwei Clients beschränkt ist. Beispielsweise können die Clients eines Freundeskreises eine gegenseitige Datenverbindung aufbauen, sodass die Triggerinformation eines Clients mehrere Clients erreicht und dort das Öffnen des jeweiligen Bildes auslöst. Sobald alle Bestätigungsinformationen beim ersten Client eingelangt sind, wird eine entsprechende, vom Nutzer registrierbare (optische, akustische, taktile) Information ausgegeben.

Bevorzugt wird die Bestätigungsinformation in eine optische Information umgewandelt, wobei das Anzeigen oder eine Veränderung der Anzeigeeigenschaften desselben Bildes oder derselben Bildfolge, das bzw. die auf dem Display des zweiten Clients angezeigt wird, auf dem Display des ersten Clients ausgelöst wird. Dies stellt eine besonders elegante Möglichkeit dar, die Bestätigungsinformation umzuwandeln, da damit gleich zwei Funktionen erbracht werden: a) Öffnen oder Anzeigen des Bildes in vergrößerter Darstellung oder höherer Qualität auf dem Display, und beinhaltend: b) Information, dass der Nutzer des zweiten Clients das Bild jetzt auf seinem Display hat. Unter Anzeigen eines Bildes oder einer Bildfolge ist zu verstehen, dass das Bild auf dem Display des ersten Clients noch nicht ersichtlich war und nun geöffnet wird. Unter Veränderung der Anzeigeeigenschaften des Bildes oder der Bildfolge ist zu verstehen, dass das Bild oder die Bildfolge (vor dem Senden der Triggerinformation) bereits zumindest teilweise zu erkennen war, z.B. als Miniaturansicht in einem Ordner oder als unscharfes und/oder verdunkeltes und/oder teilweise verdecktes Bild, und nun in seiner Qualität verbessert wird, indem es entweder vergrößert dargestellt (vorzugsweise im Vollbildmodus), scharf gestellt oder aufgehellt wird. Auch eine Veränderung von einer schwarz-weiss Darstellung des Bildes in eine farbliche Darstellung wäre denkbar. Ebenfalls als Veränderung der Anzeigeeigenschaften ist zu sehen, wenn ein das Bild teilweise verdeckender Schriftzug oder Zeichen (der/das z.B. darüber Auskunft gibt, dass das Bild am zweiten Client noch nicht sichtbar ist) nach dem Empfangen des Bestätigungssignals verschwindet.

Solange das Bestätigungssignal nicht einlangt, kann das Bild auch als "auf dem zweiten Klient nicht sichtbar" markiert bzw. überschrieben werden. Alternativ kann jede andere, für den Nutzer sichtbare Veränderung des Displays oder einer sonstigen Leuchte als optische Information dienen. Diese muss nicht unbedingt mit dem darzustellenden Bild zusammenhängen.

Bevorzugt umfasst die Veränderung der Anzeigeeigenschaften des Bildes oder der Bildfolge auf dem Display des ersten Clients und/oder auf dem Display des zweiten Clients eine Vergrößerung und/oder ein Scharfstellen und/oder ein Aufhellen des Bildes oder der Bildfolge auf dem Display.

Alternativ oder zusätzlich kann die Bestätigungsinformation in eine akustische Information umgewandelt werden, wobei ein Signalton generiert wird, und/oder in eine taktile Information umgewandelt werden, wobei ein Vibrationssignal generiert wird.

Bevorzugt werden mehrere Bilder jeweils hintereinander auf dem Display des ersten Clients und auf dem Display des zweiten Clients synchronisiert anzeigt, wobei die Schritte a) bis d) des Anspruch 1 für jedes einzelne Bild wiederholt werden. Dieses Verfahren eignet sich für das Anzeigen eines Bilderalbums aus mehreren (z.B. thematisch verknüpften) Bildern. Dabei sind vorzugsweise alle zu betrachtenden Bilder in einem Ordner gespeichert.

Bevorzugt löst die Triggerinformation des ersten Clients das Anzeigen oder die Veränderung der Anzeigeeigenschaften des Bildes oder der Bildfolge auf dem Display des zweiten Clients automatisch aus. Der Nutzer des zweiten Clients (z.B. eine ältere Person) braucht dabei nichts unternehmen und kann sich vom Nutzer des zweiten Clients (z.B. einer jüngeren Person) durch die Bildabfolge leiten lassen und dabei das gemeinsame Erlebnis des synchronisierten Betrachtens voll genießen.

Bevorzugt muss die durch den zweiten Client empfangene Triggerinformation des ersten Clients durch Betätigung einer Eingabe-Schnittstelle des zweiten Clients durch einen Nutzer bestätigt werden, bevor das Anzeigen oder eine Veränderung der Anzeigeeigenschaften des Bildes oder der Bildfolge auf dem Display des zweiten Clients ausgelöst wird. Dies kann z.B. (nur) beim ersten Bild erfolgen, um dem Nutzer des ersten Clients zu signalisieren, ob ein gemeinsames Betrachten von Bildern erwünscht ist.

Bevorzugt muss die durch den zweiten Client empfangene Triggerinformation des ersten Clients nur beim ersten Bild von mehreren, hintereinander synchronisiert anzuzeigenden Bildern durch Betätigung einer Eingabe-Schnittstelle des zweiten Clients durch einen Nutzer bestätigt werden muss, bevor das Anzeigen oder eine Veränderung der Anzeigeeigenschaften des ersten Bildes auf dem Display des zweiten Clients ausgelöst wird, und löst bei den auf das erste Bild folgenden Bildern die jeweilige Triggerinformation des ersten Clients das Anzeigen oder die Veränderung der Anzeigeeigenschaften des jeweiligen Bildes auf dem Display des zweiten Clients automatisch aus. Mit der Bestätigung gibt der Nutzer des zweiten Clients eine einmalige Einverständniserklärung ab. Bei den auf das erste Bild folgenden Bildern kann er sich gänzlich auf das Betrachten der Bilder konzentrieren.

Bevorzugt enthält die Triggerinformation und/oder die Bestätigungsinformation eine Identifikationskennung betreffend das/die synchronisiert anzuzeigende Bild oder Bildfolge, wobei vorzugsweise die Identifikationskennung den Dateinamen des Bildes oder der Bildfolge enthält. Dies erlaubt eine exakte Zuordnung von Triggerinformation und dem anzuzeigenden Bild und erlaubt auch das Betrachten der Bilder unter Umgehung einer bestimmten (z.B. durch den Ordner bzw. die Ordnereigenschaften vorgegebenen) Reihenfolge. Andernfalls könnte die Trigger- bzw. Bestätigungsinformation auch lediglich die Information ("Öffne nächstes Bild im Ordner") enthalten.

Bevorzugt erfolgt das Senden der Bestätigungsinformation zum ersten Client erst, wenn das Bild oder die Bildfolge auf dem Display des zweiten Client angezeigt wird. Dadurch wird sichergestellt, dass das Triggersignal vom zweiten Client ordnungsgemäß Empfangen und auch tatsächlich das Öffnen/Anzeigen bewirkt hat.

Bevorzugt wird durch das Schließen des Bildes oder der Bildfolge auf dem ersten Client eine Terminating-Information (Schließ-Information) automatisch generiert und zum zweiten Client gesendet, und wird nach dem Empfangen der Terminating-Information durch den zweiten Client das Bild oder die Bildfolge auf dem zweiten Client geschlossen. Somit muss sich der Nutzer des zweiten Clients auch nicht um das Schließen des (letzten) Bildes kümmern, sondern erfolgt auch das Ende des gemeinsamen Betrachtens ferngesteuert durch den ersten Client.

Bevorzugt werden vor dem Senden der Triggerinformation zum zweiten Client die Bilddaten des Bildes, der Bildfolge oder der Bilder, die synchronisiert angezeigt werden sollen, auf dem zweiten Client lokal abgespeichert. Dadurch entstehen keine Verzögerungen, die ansonsten durch die Übertragung von Bilddaten über die Datenverbindung entstehen könnten. Die Triggerinformation selbst ist klein und benötigt kaum Speicherplatz. Dies gewährleistet ein einzigartiges Erlebnis des gemeinsamen Betrachtens, zumal die Latenzzeit, um die Bilder zu synchronisieren durchschnittlich weniger als eine Sekunde beträgt (z.B. mittels UMTS Netzwerke).

Bevorzugt umfasst die Datenverbindung zumindest einen Server. Der Server erlaubt nicht nur gegenseitige Datenverbindungen mit den Clients, sondern auch das Speichern und Bereitstellen von synchronisiert anzuzeigenden Bilddaten.

Bevorzugt werden die Bilddaten des Bildes, der Bildfolge oder der Bilder (vor-zugsweise durch den ersten Client) zum Server gesendet und werden die Bilddaten durch den Server konvertiert, wobei vorzugsweise die Konvertierung der Bilddaten eine Skalierung und/oder eine Anpassung der Pixelgröße bzw. der Pixelzahl und/oder eine Anpassung der geometrischen Größe und/oder eine Komprimierung und/oder eine Umwandlung der Bilddaten in ein anderes Datenformat umfasst. Dadurch kann eine Optimierung der Bilddaten im Hinblick auf das Display des zweiten Clients vorgenommen werden, noch bevor diese zum zweiten Client gelangen.

Bevorzugt sind die Bilddaten des Bildes, der Bildfolge oder der Bilder auf dem Server gespeichert und werden vom Server zum zweiten Client gesendet und dort lokal gespeichert.

Bevorzugt wird das Senden der Bilddaten des Bildes, der Bildfolge oder der Bilder vom Server zum zweiten Client durch ein vom ersten Client generiertes und zum Server gesendetes Triggersignal ausgelöst. Durch diese Maßnahme muss sich der Nutzer des zweiten Clients nicht um die Übertragung der Bilddaten kümmern.

Bevorzugt wird zur Durchführung des Verfahrens, insbesondere zum Senden und/oder Empfangen der Triggerinformation bzw. der Bestätigungsinformation eine Software-Applikation auf dem jeweiligen Client gestartet. Durch Starten der Software-Applikation gelangen die Clients in den Betrachtungsmodus. Das Generieren und Senden des Triggersignals kann auf jede beliebige Weise erfolgen, vorzugsweise durch Auswahl eines Bildes in einem Ordner durch den Nutzer des ersten Clients.

Der Server der Datenverbindung kann ebenfalls eine auf die Software-Applikation des/der Clients abgestimmte Software-Applikation umfassen, sodass die gegenseitige Kommunikation vereinfacht werden kann.

Bevorzugt wird die Datenverbindung mittels eines Internet-Protokolls hergestellt wird, vorzugsweise XMPP (Extensible Messaging and Presence Protocol), wodurch nicht nur eine zuverlässige Datenverbindung erreicht wird, sondern eine Ankopplung an das Internet ermöglicht wird, sodass den Nutzern weitere Optionen eröffnet werden.

Bevorzugt wird zusätzlich zur aufrechten Datenverbindung eine Gesprächsverbindung zwischen den beiden Clients aufrecht gehalten. Die Gesprächsverbindung ist informationstechnisch von der Datenverbindung entkoppelt, d.h. es wird gleichzeitig das Miteinander-Sprechen über die Gesprächsverbindung und das Senden/Empfangen von Trigger- und Bestätigungssignalen ermöglicht.

Bevorzugt erfolgt die Gesprächsverbindung über ein Telefonnetz, insbesondere UMTS (Universal Mobile Telecommunications System), LTE (Long Term Evolution) oder CDMA (Code Division Multiple Access) oder andere Übertragungstechniken.

Bevorzugt sind beide Clients mobile Clients, wobei die Datenverbindung eine Funkübertragungsstrecke zum ersten Client und eine Funkübertragungsstrecke zum zweiten Client umfasst. Aufgrund der Tatsache, dass bei der eigentlichen (synchronisierten) Betrachtung nur Trigger- und Bestätigungssignale hin- und hergeschickt werden müssen, jedoch keine Bilddaten ausgetauscht werden, ist die Erfindung auch bei mobilen Clients ohne Probleme und vor allem ohne nennenswerte zeitliche Verzögerungen einsetzbar.

Bevorzugt ist/sind zumindest ein Client, vorzugsweise beide Clients ausgewählt aus der Gruppe umfassend ein Mobiltelefon, einen Tablett-Computer oder ein PDA (Personal Digital Assistent).

Der erste Client kann auch ein kabelgebundener Stand-Computer sein, sodass auch von diesem aus ein mobiler Client gemäß erfindungsgemäßem Verfahren ferngesteuert werden kann.

Bevorzugt ist die Eingabe-Schnittstelle des ersten und/oder zweiten Clients eine taktile Eingabeeinrichtung, insbesondere ein Touchscreen oder eine Tastatur, oder ein Mikrophon mit einer Spracherkennungssoftware.

Bevorzugt ist/sind das auf dem Display des ersten Clients und auf dem Display des zweiten Clients synchronisiert anzuzeigende Bild bzw. Bilder (ein) Foto(s), und/oder ist die auf dem Display des ersten Clients und auf dem Display des zweiten Clients synchronisiert anzuzeigende Bildfolge ein Video.

Bevorzugt werden die Fotos und/oder das Video mit einer Aufnahmeeinrichtung, insbesondere Kamera, des ersten Clients aufgenommen. Jedoch ist es selbstverständlich denkbar, dass das Bildmaterial auch von einer Aufnahmeeinrichtung des zweiten Clients stammt.

Eine bevorzugte Ausführungsform zeichnet sich dadurch aus, dass während des synchronisierten Anzeigens eines Bildes, einer Bildfolge oder mehrerer Bilder hintereinander ein synchronisiertes Anzeigen einer Auswahlinformation auf dem Display des ersten Clients und auf dem Display des zweiten Clients erfolgt, wobei die Auswahlinformation zumindest einen Ausschnitt des Bildes oder der Bildfolge hervorhebt und/oder markiert und/oder auf zumindest einen Ausschnitt des Bildes oder der Bildfolge hinweist, umfassend die Schritte:
- Generieren einer Triggerinformation durch einen der Clients infolge einer Betätigung einer Eingabe-Schnittstelle des einen Clients durch einen Nutzer und Senden der Triggerinformation über die Datenverbindung zum anderen Client,
- Empfangen der Triggerinformation durch den anderen Client, wobei die Triggerinformation das Anzeigen der Auswahlinformation auf dem Display des anderen Clients auslöst.

Auf diese Weise kann der Nutzer des einen Clients den Nutzer des anderen Clients auf bestimmte Ausschnitte bzw. Objekte des Bildes aufmerksam machen. Die Interaktivität wird dadurch noch erhöht, da die dem Bild bzw. der Bildfolge überlagerte Auswahlinformation diese Aufgabe auf elegante Weise erfüllt und Missverständnisse, die durch bloße mündliche Kommunikation entstehen können, ausschließt. Die Auswahlinformation dient zum Auswählen eines Bildausschnittes bzw. Bildbereiches durch den Nutzer und kann jede denkbare graphische Ausbildung besitzen. Die Auswahlinformation kann sich z.B. in Form eines Symbols, eines Cursors, eines Pfeiles, eines Fingers, eines Auswahlrahmens, einer vergrößerten und/oder aufgehellten Darstellung des betreffenden Bildausschnittes manifestieren. Die Auswahlinformation wird dadurch generiert, dass der Nutzer des einen Clients durch entsprechende Eingabe, insbesondere durch Berühren des Touch-Screen-Displays seines Clients, den gewünschten Ausschnitt des Bildes auswählt.

Vorzugsweise umfasst das Verfahren weiters die Schritte:
nach dem Empfangen der Triggerinformation durch den anderen Client, vorzugsweise sobald die Auswahlinformation auf dem Display des anderen Clients angezeigt wird: automatisches Senden einer vom anderen Client generierten Bestätigungsinformation zu dem einen Client, und
Empfangen der Bestätigungsinformation durch den einen Client, wobei die Bestätigungsinformation das Anzeigen der Auswahlinformation, die auf dem Display des anderen Clients angezeigt wird, auf dem Display des einen Clients auslöst.

Durch diese Maßnahme wird gewährleistet, dass sich der die Auswahlinformation generierende Nutzer sicher sein kann, dass die Auswahlinformation tatsächlich auf beiden Clients dargestellt wird.

Das Ziel wird auch erreicht mit einem System zum synchronisierten Anzeigen eines Bildes, einer Bildfolge oder mehrerer Bilder hintereinander auf dem Display eines ersten Clients und auf dem Display eines zweiten Clients, wobei zumindest der zweite Client ein mobiler Client ist und der erste Client und der zweite Client ausgebildet sind, um über eine Datenverbindung, die eine Funkübertragungsstrecke zum zweiten Client umfasst, miteinander zu kommunizieren, wobei das System zur Durchführung des Verfahrens nach einer der oben beschriebenen Ausführungsformen ausgebildet ist.

Das Ziel wird auch erreicht mit einem mobilen Client mit einer Eingabe-Schnittstelle, einem Display, einem Speicher und einem Prozessor, wobei der Client ausgebildet ist, um über eine Datenverbindung, die eine Funkübertragungsstrecke um-fasst, mit einem anderen Client zu kommunizieren, wobei der Client ausgebildet ist, um in einem Verfahren nach einem der oben beschriebenen Ausführungsformen eingesetzt zu werden, und wobei der Client eine Software-Applikation umfasst, die ausgebildet ist, um
- über die Datenverbindung eine Triggerinformation des anderen Clients zu empfangen und in Abhängigkeit der Triggerinformation das Anzeigen oder eine Veränderung der Anzeigeeigenschaften eines Bildes oder einer Bildfolge, dessen/deren Bilddaten im Speicher des Clients gespeichert sind, auf dem Display des Clients auszulösen, und
- nach dem Empfangen der Triggerinformation, vorzugsweise sobald das Bild oder die Bildfolge auf dem Display des zweiten Clients angezeigt wird oder dessen/deren Anzeigeeigenschaften auf dem Display verändert wurden, automatisch eine Bestätigungsinformation zu generieren und an den Client, von dem die Triggerinformation stammt, zu senden.

Das Ziel wird auch erreicht mit einem Client, insbesondere mobilen Client, mit einer Eingabe-Schnittstelle, einem Display, einem Speicher und einem Prozessor, wobei der Client ausgebildet ist, um über eine Datenverbindung, die eine Funkübertragungsstrecke umfasst, mit einem anderen Client zu kommunizieren, wobei der Client ausgebildet ist, um in einem Verfahren nach einem der oben beschriebenen Ausführungsformen eingesetzt zu werden, und wobei der Client eine Software-Applikation umfasst, die ausgebildet ist, um
- infolge einer Betätigung einer Eingabe-Schnittstelle des Clients durch einen Nutzer eine Triggerinformation zu generieren und über die Datenverbindung zu einem anderen Client zu senden, und
- eine Bestätigungsinformation vom anderen Client, an den die Triggerinformation gesendet wurde, zu empfangen und in eine optische und/oder akustische und/oder taktile Information umzuwandeln.

Bevorzugt ist die Software-Applikation dazu ausgebildet, um das Bestätigungsinformation in eine optische Information umzuwandeln, wobei das Anzeigen oder eine Veränderung der Anzeigeeigenschaften desselben Bildes oder derselben Bildfolge, das bzw. die auf dem Display des anderen Clients angezeigt wird, auf dem Display des Clients ausgelöst wird.

Bevorzugt ist der Client dazu ausgebildet, um während der Kommunikation über die Datenverbindung zusätzlich über eine Telefonverbindung, insbesondere über UMTS (Universal Mobile Telecommunications System), LTE (Long Term Evolution) oder CDMA (Code Division Multiple Access) oder andere Übertragungstechniken, mit dem anderen Client zu kommunizieren.

Zum besseren Verständnis der Erfindung wird diese anhand der nachfolgenden Figuren näher erläutert.

Es zeigen jeweils in stark schematisch vereinfachter Darstellung:
- Fig. 1: ein erfindungsgemäßes System zum gleichzeitigen Anzeigen von Bildern/Bildfolgen auf den Displays zweier Clients;
- Fig. 2: eine Ausführungsform eines erfindungsgemäßen Verfahrens in Form eines Fließdiagramms;
- Fig. 3: das Übermitteln von Bilddaten von einem ersten Client zu einem zweiten Client;
- Fig. 4: das erfindungsgemäße Verfahren anhand der Displays der beiden Clients;
- Fig. 5: Clients zur Anwendung in einem erfindungsgemäßen Verfahren;
- Fig. 6: ein Verfahren zum synchronisierten Anzeigen einer Auswahlinformation.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die Ausführungsbeispiele zeigen mögliche Ausführungsvarianten des Verfahrens, des Systems und des/der Clients, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Erfindung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

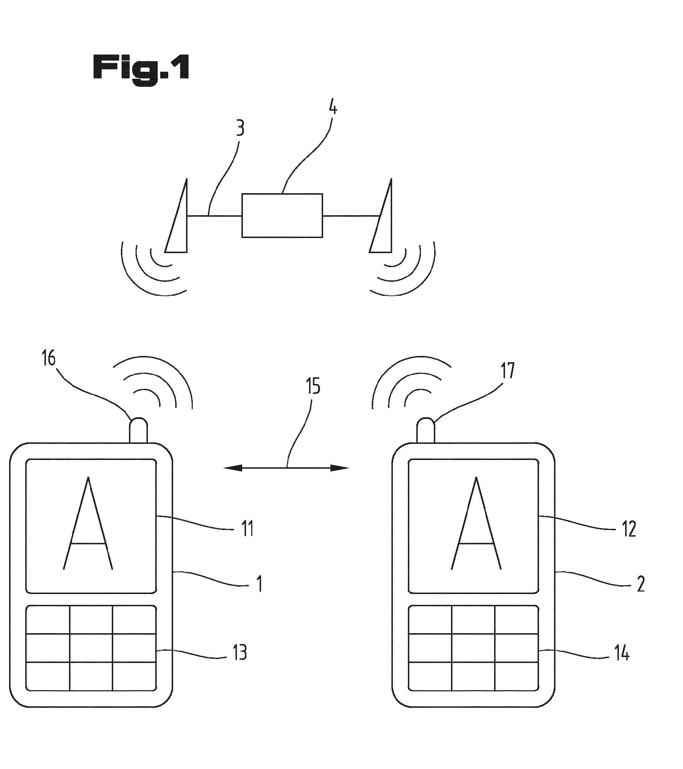

Fig. 1 zeigt ein System zum synchronisierten Anzeigen eines Bildes A, einer Bildfolge oder mehrerer Bilder hintereinander auf dem Display 11 eines ersten Clients 1 und auf dem Display 12 eines zweiten Clients 2. Beide Clients 1, 2 sind im dargestellten Ausführungsbeispiel Mobiltelefone. Die beiden Clients 1, 2 des erfindungsgemäßen Systems sind dazu ausgebildet, um über eine Datenverbindung 3 miteinander zu kommunizieren. Die Datenverbindung 3 umfasst zumindest einen Server 4, auf dem auch Bilddaten gespeichert werden können. Im dargestellten Ausführungsbeispiel sind beide Clients 1, 2 mobile Clients, wobei die Datenverbindung 3 eine Funkübertragungsstrecke zum ersten Client 1 und eine Funkübertragungsstrecke zum zweiten Client 2 umfasst. Zur Herstellung der Datenverbindung 3 über die Funkübertragungsstrecke umfasst jeder der beiden Clients 1, 2 eine Empfangseinrichtung 16, 17, die eine Funkantenne beinhaltet.

Alternativ zu der in Fig. 1 dargestellten Ausführungsform kann es sich bei den Clients auch um ein Smartphone, einen Tablett-Computer oder ein PDA (Personal Digital Assistent) handeln. Der erste Client 1 kann darüber hinaus auch ein kabelgebundener Stand-Computer sein.

Ebenfalls in Fig. 1 dargestellt sind die Eingabe-Schnittstellen 13, 14 der jeweiligen Clients 1, 2, die es dem Nutzer ermöglichen, den Client zu bedienen. Anstelle der in Fig. 1 schematisch dargestellten Tastatur kann es sich bei der Eingabe-Schnittstelle auch um einen Touchscreen, also einer kombinierten Anzeige/Eingabe-Schnittstelle, handeln, und/oder um ein Mikrophon im Zusammenspiel mit einer auf dem Client installierten Spracherkennungssoftware.

Der Doppelpfeil deutet eine Gesprächsverbindung 15 an, die zusätzlich, d.h. parallel zur Datenverbindung 3 zwischen den beiden Clients 1, 2 aufrecht gehalten werden kann. Die Gesprächsverbindung 15 erfolgt über ein Telefonnetz, insbesondere UMTS (Universal Mobile Telecommunications System), LTE (Long Term Evolution) oder CDMA (Code Division Multiple Access) oder andere Übertragungstechniken.

Auf den Displays 11, 12 beider Clients 1, 2 ist dasselbe Bild A zu sehen, das gemäß Erfindung gleichzeitig angezeigt und betrachtet werden kann. Es wird an dieser Stelle ausdrücklich hervorgehoben, dass die Bilddaten des auf beiden Clients 1, 2 angezeigten Bildes nicht identisch sein müssen. So ist es durchaus denkbar, dass die Bilddaten des Bildes im Zuge der Übertragung oder vom Server 4 komprimiert und/oder für die Anzeige auf dem zweiten Client optimiert und/oder verschlüsselt wurden. Dies ändert jedoch nichts an der Tatsache, dass die beiderorts angezeigten Bilder in Bezug auf ihren Inhalt, d.h. die dargestellte Szenerie, dieselben sind und auf denselben (Ursprungs)Datensatz zurückzuführen sind.

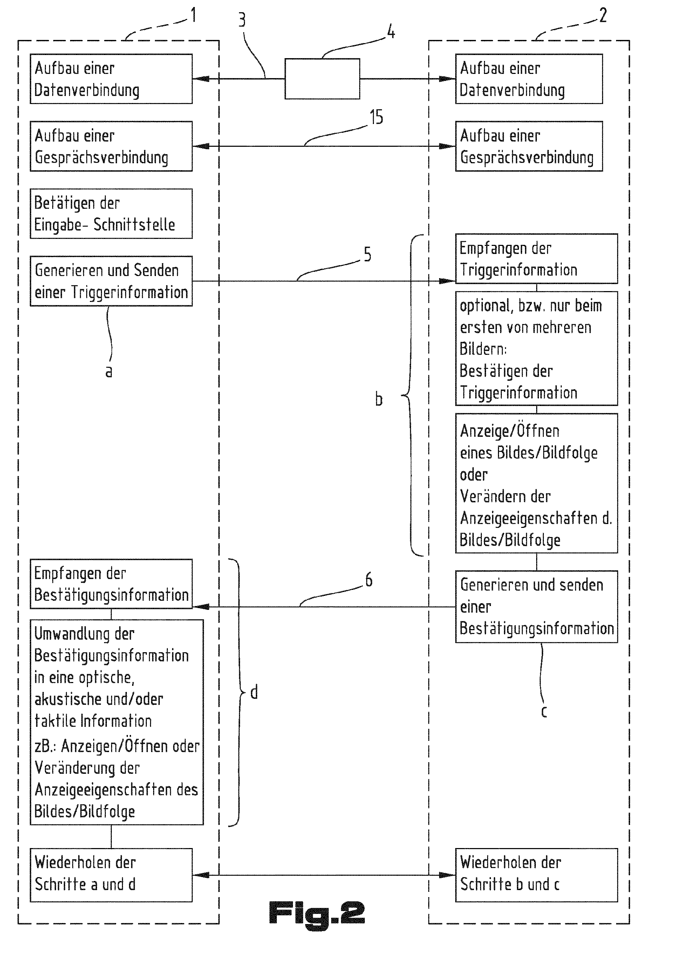

Fig. 2 zeigt nun in Form eines Fließdiagramms den Ablauf einer bevorzugten Ausführungsform der Erfindung. Zunächst wird eine Datenverbindung 3 zwischen den beiden Clients 1, 2 über den Server 4 aufgebaut. Bei der Datenverbindung 3 handelt es sich um ein Internet-Protokoll, vorzugsweise das XMPP (Extensible Messaging and Presence Protocol). Anschließend wird eine Gesprächsverbindung 15 zwischen den beiden Clients 1, 2 über das Telefonnetz aufgebaut. Es wäre auch denkbar die Gesprächsverbindung 15 vor der oder gleichzeitig zur Datenverbindung 3 aufzubauen, wie die Gesprächsverbindung 15 als solche überhaupt nur optional ist.

Der Nutzer des ersten Clients betätigt nun die Eingabe-Schnittstelle 13, indem er z.B. das zu betrachtende Bild im Ordner anwählt (z.B. anklickst). Infolge dieser Betätigung wird eine automatische Triggerinformation 5 durch den ersten Client 1 generiert und über die Datenverbindung 3 dem zweiten Client 2 übermittelt.

Der zweite Client empfängt die Triggerinformation 5, die im zweiten Client 2 automatisch das Öffnen (d.h. Anzeigen) jenes Bildes oder jener Bildfolge, die der Nutzer des ersten Clients 1 ausgewählt hat, auf dem Display 12 des zweiten Clients 2 auslöst. Wenn das Bild oder die Bildfolge bereits teilweise zu erkennen war (z.B. als Miniaturansicht im entsprechenden Dateiordner) bewirkt die Triggerinformation 5 nun eine Veränderung der Anzeigeeigenschaften des Bildes oder der Bildfolge, insbesondere eine Vergrößerung, vorzugsweise auf Vollbildgröße. In einer Ausführungsform der Erfindung (optional) wird vom Nutzer ein Bestätigen der Triggerinformation 5 durch Betätigung seiner Eingabe-Schnittstelle 14 erwartet, bevor das Bild/Bildfolge auf dem Display 12 geöffnet bzw. verändert wird. Diese Funktionalität des Bestätigungsvorganges ist vorzugsweise nur beim ersten von mehreren hintereinander synchronisiert anzuzeigenden Bildern implementiert. Bei den auf das erste Bild folgenden Bildern entfällt das Erfordernis einer Bestätigung, d.h. bei den auf das erste Bild folgenden Bildern löst das jeweilige Triggersignal 5 automatisch das Öffnen bzw. die finale Darstellung des jeweiligen Bildes auf dem Display 12 des zweiten Clients 2 aus.

Nach dem Empfangen der Triggerinformation 5 durch den zweiten Client 2, vorzugsweise sobald das Bild oder die Bildfolge auf dem Display 12 des zweiten Clients 2 angezeigt wird oder dessen/deren Anzeigeeigenschaften verändert wurden, erfolgt ein automatisches Senden einer vom zweiten Client 2 generierten Bestätigungsinformation 6 zum ersten Client 1.

Der erste Client 1 empfängt die Bestätigungsinformation 6 und wandelt diese in eine optische und/oder akustische und/oder taktile Information um. Bevorzugt handelt es sich um ein optische Information, die das Öffnen (d.h. Anzeigen) oder eine Veränderung der Anzeigeeigenschaften desselben Bildes oder derselben Bildfolge, das bzw. die auf dem Display 12 des zweiten Clients 2 angezeigt wird, auf dem Display 11 des ersten Clients 1 beinhaltet. Eine Veränderung der Anzeigeeigenschaften des Bildes oder der Bildfolge auf dem Display 11 des ersten Clients 1 und/oder auf dem Display 12 des zweiten Clients 2 kann z.B. eine Vergrößerung und/oder ein Scharfstellen und/oder ein Aufhellen des Bildes oder der Bildfolge auf dem Display beinhalten.

Um mehrere Bilder eines Albums hintereinander jeweils synchronisiert anzuzeigen, werden nun die Schritte a und d auf der Seite der ersten Clients 1 und die Schritte b und c auf der Seite des zweiten Clients 2 für jedes einzelne Bild wiederholt.

Die Triggerinformation 5 und/oder die Bestätigungsinformation 6 beinhalten vorzugsweise eine Identifikationskennung betreffend das/die sychronisiert anzuzeigende Bild oder Bildfolge. Dadurch wird eine eindeutige Identifikation des anzuzeigenden Bildes gewährleistet. Z.B. kann die Identifikationskennung den Dateinamen oder auch eine verschlüsselte Information des Bildes oder der Bildfolge enthalten.

Nach Betrachten aller Bilder eines Albums kann in einer bevorzugten Ausführungsform durch das Schließen des Bildes oder der Bildfolge auf dem ersten Client 1 eine Terminating-Information automatisch generiert und zum zweiten Client 2 gesendet werden. Die Terminating-Information bewirkt beim zweiten Client 2 das Schließen des Bildes oder der Bildfolge.

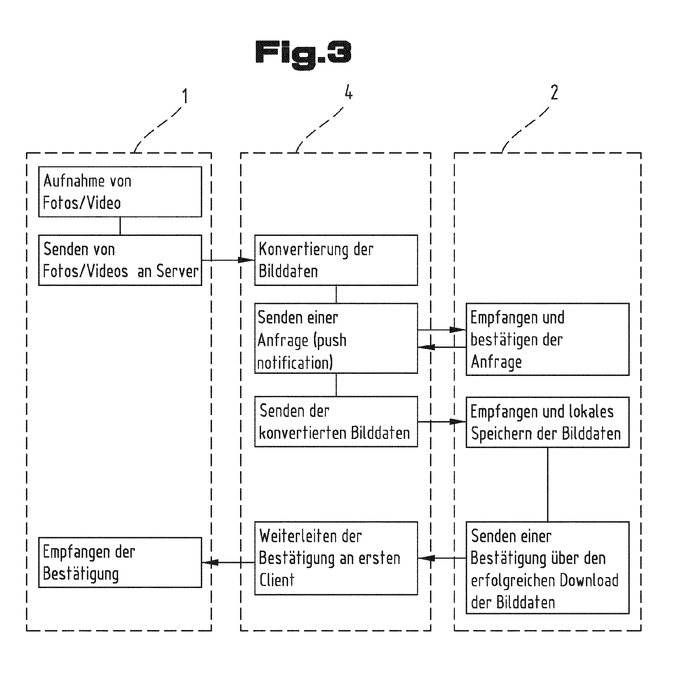

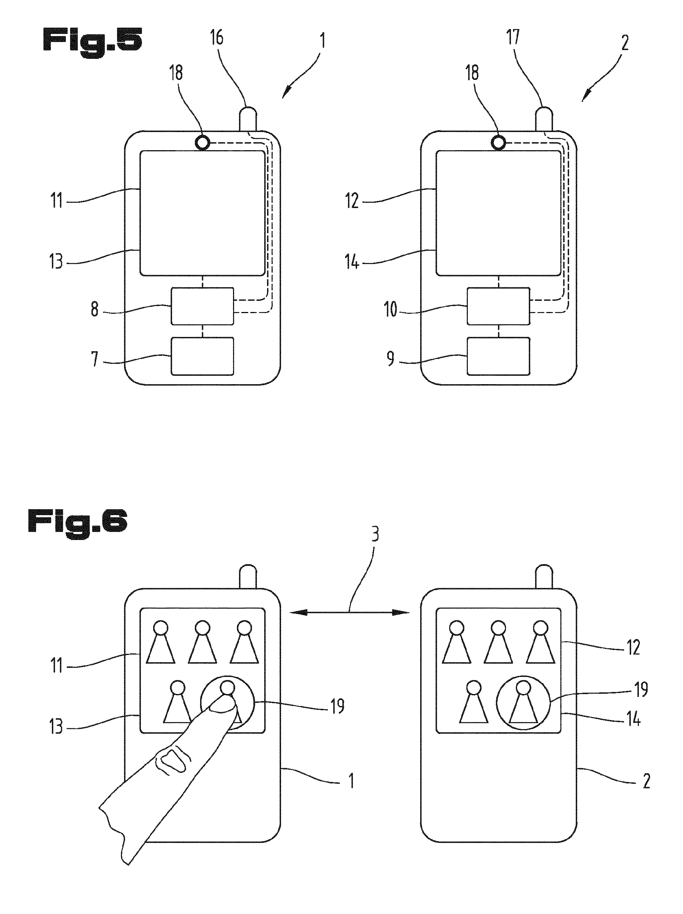

Fig. 3 zeigt eine Ausführungsform der Erfindung, bei der die Bilddaten vor dem gemeinsamen Betrachten auf den zweiten Client 2 übertragen und dort lokal abgespeichert werden. Dabei handelt es sich um Fotos bzw. Videos, die mit einer Aufnahmeeinrichtung 18 des ersten Clients 1 (Fig. 5) aufgenommen werden. Zunächst werden die Fotos und/oder Videos an den Server 4 übermittelt. Der Server 4 konvertiert nun die Bilddaten der Bilder bzw. Bildfolgen, damit diese auf dem Display 12 des zweiten Client 2 optimal angezeigt werden können. Die Konvertierung kann eine Skalierung und/oder eine Anpassung der Pixelgröße bzw. der Pixelzahl und/oder eine Anpassung der geometrischen Größe der Bilddaten und/oder eine

Komprimierung und/oder eine Umwandlung in ein anderes Datenformat (.jpg, .png, .tiff, etc.) umfassen. Vorzugsweise erfolgt die Konvertierung derart, dass die Fläche des Displays 12 des zweiten Clients 2 mit dem Bild bzw. der Bildfolge voll ausgefüllt werden kann. Eine derartige Konvertierung ist insbesondere dann vorteilhaft, wenn die mit einem Smartphone (als erstem Client 1) aufgenommenen Bilder auf einem mobilen (zweiten) Client mit etwas kleinerem Display 12 dargestellt werden sollen. Die Bilddaten stehen nun am Server 4 abgespeichert zur Verfügung.

Der Server 4 sendet nun eine Anfrage (z.B. in Form einer push notification) an den zweiten Client 2, ob ein Download der Bilddaten auf den zweiten Client 2 möglich ist (z.B. dort genügend Speicherplatz zur Verfügung steht). Dieser empfängt die Anfrage und bestätigt dem Server 4, dass ein Download möglich ist. Anschließend werden die konvertierten Bilddaten vom Server 4 zum zweiten Client 2 gesendet und auf letzterem lokal abgespeichert. Sobald der Download der Bilddaten erfolgreich durchgeführt wurde, sendet der zweite Client 2 eine Bestätigung an den Server 4 über den erfolgreichen Download. Der Server 4 leitet die Bestätigung an den ersten Client 1 weiter, um diesem anzuzeigen, dass die Bilddaten nun auf dem zweiten Client 2 gespeichert sind und für ein synchronisiertes Anzeigen bzw. Betrachten der Bilder bzw. Bildfolge bereit stehen.

Ist diese Prozedur erledigt, kann mit den in Fig. 2 dargestellten Schritten fortgesetzt werden. Selbstverständlich können die Bilddaten von einem Client auf den anderen auch auf andere Weise übermittelt werden, z.B. per e-mail.

Das Verfahren, insbesondere zum Senden und/oder Empfangen der Triggerinformation 5 bzw. der Bestätigungsinformation 6, beruht auf einer Software-Applikation, die auf dem jeweiligen Client 1, 2 installiert ist. Diese könnte z.B. in Form einer "App" nachträglich auf dem Client installiert werden.

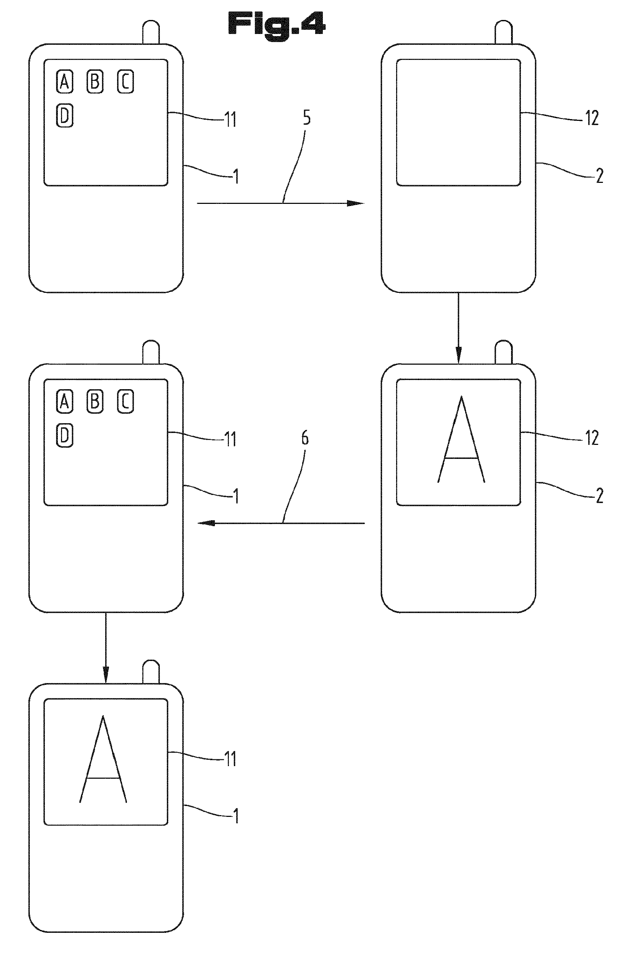

Fig. 4 zeigt in schematischer Weise eine Ausführungsform anhand der Displays 11, 12 der beiden Clients 1, 2. Links ist jeweils der erste Client 1 dargestellt, während rechts der zweite Client 2 dargestellt ist. Die in Miniaturansichten präsentierten Bilder A, B, C und D sind zunächst auf dem ersten Client 1 ersichtlich. Durch Auswählen des Bildes A (z.B. auf einem Touchscreen) wird eine auf das Bild A bezogene Triggerinformation 5 zum zweiten Client 2 gesendet. Die Triggerinformation 5 löst dort das Öffnen des Bildes A aus. Sobald das Bild A auf dem Display 12 des zweiten Clients 2 angezeigt ist, wird eine das Anzeigen des Bildes A bestätigende Bestätigungsinformation 6 an den ersten Client 1 gesendet. Die Bestätigungsinformation 6 löst im ersten Client 1 das Öffnen bzw. Vergrößern des Bildes A aus. Mit anderen Worten: Die Bestätigungsinformation 6 bewirkt auf dem Display 11 des ersten Clients 1 die finale Darstellung des Bildes, die während des Betrachtungsvorganges (vorzugsweise bis zum Öffnen des nächsten Bildes) beibehalten wird. Nun ist ein gleichzeitiges Betrachten möglich.

Fig. 5 zeigt schließlich zwei Clients 1, 2 mit jeweils einer Empfangseinrichtung 16, 17, einer Eingabe-Schnittstelle 13, 14, einem Display 11, 12, einem Speicher 7, 9, einem Prozessor 8, 10 und einer Bildaufnahmeeinrichtung 18.

Der erste Client 1 ist dazu ausgebildet, um in einem erfindungsgemäßen Verfahren eingesetzt zu werden, und umfasst eine auf dem Prozessor 8 lauffähige Software-Applikation, die ausgebildet ist, um infolge einer Betätigung einer Eingabe-Schnittstelle 13 des Clients 1 durch einen Nutzer eine Triggerinformation 5 zu generieren und über die Datenverbindung 3 zu einem anderen Client 2 zu senden. Außerdem ist die Software-Applikation dazu ausgebildet, um eine Bestätigungsinformation 6 vom anderen Client 2, an den die Triggerinformation 5 gesendet wurde, zu empfangen und in eine optische und/oder akustische und/oder taktile Information umzuwandeln.

Der zweite Client 2 ist ausgebildet, um in einem erfindungsgemäßen Verfahren eingesetzt zu werden, und umfasst eine auf dem Prozessor 10 lauffähige Software-Applikation, die ausgebildet ist, um über die Datenverbindung 3 eine Triggerinformation 5 des ersten Clients 1 zu empfangen und in Abhängigkeit der Triggerinformation 5 das Anzeigen oder eine Veränderung der Anzeigeeigenschaften eines Bildes oder einer Bildfolge, dessen/deren Bilddaten im Speicher 9 des Clients 2 gespeichert sind, auf dem Display 12 des Clients 2 auszulösen. Außerdem ist die Software-Applikation ausgebildet, um nach dem Empfangen der Triggerinformation 5, vorzugsweise sobald das Bild oder die Bildfolge auf dem Display 12 des zweiten Clients 2 angezeigt wird oder dessen/deren Anzeigeeigenschaften auf dem Display 12 verändert wurden, automatisch eine Bestätigungsinformation 6 zu generieren und an den Client 1, von dem die Triggerinformation 5 stammt, zu senden.

Die Software-Applikation ist jeweils im Prozessor 8, 10 bzw. im Speicher 7, 9 gespeichert.

Die in Fig. 5 dargestellten Clients 1, 2 sind weiters dazu ausgebildet, um während der Kommunikation über die Datenverbindung 3 zusätzlich über eine Telefonverbindung, insbesondere über UMTS (Universal Mobile Telecommunications System), LTE (Long Term Evolution) oder CDMA (Code Division Multiple Access) oder andere Übertragungstechniken, mit dem jeweils anderen Client 2, 1 zu kommunizieren.

Fig. 6 zeigt bevorzugte Ausführungsform, bei der während des synchronisierten Anzeigens eines Bildes, einer Bildfolge oder mehrerer Bilder hintereinander ein synchronisiertes Anzeigen einer Auswahlinformation 19 auf dem Display 11 des ersten Clients 1 und auf dem Display 12 des zweiten Clients 2 erfolgt, wobei die Auswahlinformation 19 zumindest einen Ausschnitt des Bildes oder der Bildfolge hervorhebt und/oder markiert und/oder auf zumindest einen Ausschnitt des Bildes oder der Bildfolge hinweist. In der dargestellten Ausführungsform zeigt das Bild ein Gruppenfoto mehreren Personen und besteht die Auswahlinformation 19 in einem runden Auswahlrahmen. Die Kontur des Auswahlrahmens kann selbstverständlich andere Form aufweisen. Die Grenzen des Auswahlrahmens können z.B. scharf oder aber auch fließend ausgebildet sein. Cursors, Finger, Pfeile, vergrößerte und/oder aufgehellte

Darstellungen des Bildausschnittes wären alternativ ebenso als graphische Auswahlinformation denkbar. Die Generierung sowie das Anzeigen der Auswahlinformation 19 können auf dieselbe oder ähnliche Weise erfolgen wie die zuvor beschriebene Generierung und Anzeige eines Bildes bzw. der Bildfolge.

Zunächst erfolgt ein Generieren einer Triggerinformation durch einen der Clients 1, 2 infolge einer Betätigung einer Eingabe-Schnittstelle 13, 14 des einen Clients 1, 2 durch einen Nutzer und Senden der Triggerinformation über die Datenverbindung 3 zum anderen Client 2, 1.

In der in Fig. 6 dargestellten Ausführungsform sind die Eingabe-Schnittstellen 13, 14 jeweils in Form eines Touch-Screens ausgebildet. Es handelt sich somit jeweils um eine kombinierte Anzeige/Eingabe-Schnittstelle. Die generierte Triggerinformation enthält die Auswahlinformation 19 in codierter Form. Anschließend erfolgt das Empfangen der Triggerinformation durch den anderen Client 2, 1, wobei die Triggerinformation das Anzeigen der Auswahlinformation 19 auf dem Display 12, 11 des anderen Clients 2, 1 auslöst.

Optional kann das Verfahren zusätzlich die nachfolgenden Schritte umfassen:

nach dem Empfangen der Triggerinformation durch den anderen Client 2, 1, vorzugsweise sobald die Auswahlinformation 19 auf dem Display 12, 11 des anderen Clients 2, 1 angezeigt wird: automatisches Senden einer vom anderen Client 2, 1 generierten Bestätigungsinformation zu dem einen Client 1, 2, und

Empfangen der Bestätigungsinformation durch den einen Client 1, 2, wobei die Bestätigungsinformation das Anzeigen der Auswahlinformation 19, die auf dem Display 12, 11 des anderen Clients 2, 1 angezeigt wird, auf dem Display 11, 12 des einen Clients 1, 2 auslöst.

### Bezugszeichenaufstellung

- 1: Erster Client
- 2: Zweiter Client
- 3: Datenverbindung
- 4: Server
- 5: Triggersignal

- 6: Bestätigungssignal
- 7: Speicher
- 8: Prozessor
- 9: Speicher
- 10: Prozessor

- 11: Display
- 12: Display
- 13: Eingabe-Schnittstelle
- 14: Eingabe-Schnittstelle
- 15: Gesprächsverbindung

- 16: Empfangseinrichtung
- 17: Empfangseinrichtung
- 18: Aufnahmeeinrichtung
- 19: Auswahlinformation
- A, B, C, D: Bild
- a, b, c, d: Verfahrensschritte

## Patentansprüche

1. Verfahren zum synchronisierten Anzeigen eines Bildes, einer Bildfolge oder mehrerer Bilder hintereinander auf dem Display (11) eines ersten Clients (1) und auf dem Display (12) eines zweiten Clients (2), wobei zumindest der zweite Client (2) ein mobiler Client ist und der erste Client (1) und der zweite Client (2) über eine Datenverbindung (3), die eine Funkübertragungsstrecke zum zweiten Client (2) umfasst, miteinander kommunizieren, **gekennzeichnet durch** die Schritte:
a) Generieren einer Triggerinformation (5) **durch** den ersten Client (1) infolge einer Betätigung einer Eingabe-Schnittstelle (13) des ersten Clients (1) **durch** einen Nutzer und Senden der Triggerinformation (5) über die Datenverbindung (3) zum zweiten Client (2),
b) Empfangen der Triggerinformation (5) **durch** den zweiten Client (2), wobei die Triggerinformation (5) das Anzeigen oder eine Veränderung der Anzeigeeigenschaften eines Bildes oder einer Bildfolge auf dem Display (12) des zweiten Clients (2) auslöst,
c) nach dem Empfangen der Triggerinformation (5) **durch** den zweiten Client (2), vorzugsweise sobald das Bild oder die Bildfolge auf dem Display (12) des zweiten Clients (2) angezeigt wird oder dessen/deren Anzeigeeigenschaften verändert wurden: automatisches Senden einer vom zweiten Client (2) generierten Bestätigungsinformation (6) zum ersten Client (1),
d) Empfangen der Bestätigungsinformation (6) **durch** den ersten Client (1), wobei die Bestätigungsinformation (6) **durch** den ersten Client (1) in eine optische und/oder akustische und/oder taktile Information umgewandelt wird.

2. Verfahren nach Anspruch 1, **dadurch gekennzeichnet, dass** die Bestätigungsinformation (6) in eine optische Information umgewandelt wird, wobei das Anzeigen oder eine Veränderung der Anzeigeeigenschaften desselben Bildes oder derselben Bildfolge, das bzw. die auf dem Display (12) des zweiten Clients (2) angezeigt wird, auf dem Display (11) des ersten Clients (1) ausgelöst wird.

3. Verfahren nach Anspruch 1 oder 2, **dadurch gekennzeichnet, dass** die Bestätigungsinformation (6) in eine akustische Information umgewandelt wird, wobei ein Signalton generiert wird, und/oder dass die Bestätigungsinformation (6) in eine taktile Information umgewandelt wird, wobei ein Vibrationssignal generiert wird.

4. Verfahren nach einem der vorhergehenden Ansprüche, **dadurch gekennzeichnet, dass** mehrere Bilder jeweils hintereinander auf dem Display (11) des ersten Clients (1) und auf dem Display (12) des zweiten Clients (2) synchronisiert anzeigt werden, wobei die Schritte a) bis d) des Anspruch 1 für jedes einzelne Bild wiederholt werden.

5. Verfahren nach einem der Ansprüche 2 bis 4, **dadurch gekennzeichnet, dass** die Veränderung der Anzeigeeigenschaften des Bildes oder der Bildfolge auf dem Display (11) des ersten Clients (1) und/oder auf dem Display (12) des zweiten Clients (2) eine Vergrößerung und/oder ein Scharfstellen und/oder ein Aufhellen des Bildes oder der Bildfolge und/oder ein Entfernen eines das Bild oder die Bildfolge verdeckenden Schriftzuges oder Zeichens auf dem Display umfasst.

6. Verfahren nach einem der vorhergehenden Ansprüche, **dadurch gekennzeichnet, dass** die Triggerinformation (5) des ersten Clients (1) das Anzeigen oder die Veränderung der Anzeigeeigenschaften des Bildes oder der Bildfolge auf dem Display (12) des zweiten Clients (2) automatisch auslöst.

7. Verfahren nach einem der vorhergehenden Ansprüche, **dadurch gekennzeichnet, dass** die durch den zweiten Client (2) empfangene Triggerinformation (5) des ersten Clients (1) durch Betätigung einer Eingabe-Schnittstelle (14) des zweiten Clients (2) durch einen Nutzer bestätigt werden muss, bevor das Anzeigen oder eine Veränderung der Anzeigeeigenschaften des Bildes oder der Bildfolge auf dem Display (12) des zweiten Clients (2) ausgelöst wird.

8. Verfahren nach einem der vorhergehenden Ansprüche, **dadurch gekennzeichnet, dass** die durch den zweiten Client (2) empfangene Triggerinformation (5) des ersten Clients (1) nur beim ersten Bild von mehreren, hintereinander synchronisiert anzuzeigenden Bildern durch Betätigung einer Eingabe-Schnittstelle (14) des zweiten Clients (2) durch einen Nutzer bestätigt werden muss, bevor das Anzeigen oder eine Veränderung der Anzeigeeigenschaften des ersten Bildes auf dem Display (12) des zweiten Clients (2) ausgelöst wird, und dass bei den auf das erste Bild folgenden Bildern die jeweilige Triggerinformation (5) des ersten Clients (1) das Anzeigen oder die Veränderung der Anzeigeeigenschaften des jeweiligen Bildes auf dem Display (12) des zweiten Clients (2) automatisch auslöst.

9. Verfahren nach einem der vorhergehenden Ansprüche, **dadurch gekennzeichnet, dass** die Triggerinformation (5) und/oder die Bestätigungsinformation (6) eine Identifikationskennung betreffend das/die synchronisiert anzuzeigende Bild oder Bildfolge enthält, wobei vorzugsweise die Identifikationskennung den Dateinamen des Bildes oder der Bildfolge enthält.

10. Verfahren nach einem der vorhergehenden Ansprüche, **dadurch gekennzeichnet, dass** das Senden der Bestätigungsinformation (6) zum ersten Client (1) erst erfolgt, wenn das Bild oder die Bildfolge auf dem Display (12) des zweiten Client (2) angezeigt wird.

11. Verfahren nach einem der vorhergehenden Ansprüche, **dadurch gekennzeichnet, dass** durch das Schließen des Bildes oder der Bildfolge auf dem ersten Client (1) eine Terminating-Information automatisch generiert und zum zweiten Client (2) gesendet wird, und dass nach dem Empfangen der Terminating-Information durch den zweiten Client (2) das Bild oder die Bildfolge auf dem zweiten Client (2) geschlossen wird.

12. Verfahren nach einem der vorhergehenden Ansprüche, **dadurch gekennzeichnet, dass** vor dem Senden der Triggerinformation (5) zum zweiten Client (2) die Bilddaten des Bildes, der Bildfolge oder der Bilder, die synchronisiert angezeigt werden sollen, auf dem zweiten Client (2) lokal abgespeichert werden.

13. Verfahren nach einem der vorhergehenden Ansprüche, **dadurch gekennzeichnet, dass** die Datenverbindung (3) zumindest einen Server (4) umfasst.

14. Verfahren nach einem der vorhergehenden Ansprüche, **dadurch gekennzeichnet, dass** die Bilddaten des Bildes, der Bildfolge oder der Bilder vorzugsweise durch den ersten Client (1) zum Server (4) gesendet werden und dass die Bilddaten durch den Server (4) konvertiert werden, wobei vorzugsweise die Konvertierung der Bilddaten eine Skalierung und/oder eine Anpassung der Pixelgröße bzw. der Pixelzahl und/oder eine Anpassung der geometrischen Größe und/oder eine Komprimierung und/oder eine Umwandlung der Bilddaten in ein anderes Datenformat umfasst.

15. Verfahren nach Anspruch 13 oder 14, **dadurch gekennzeichnet, dass** die Bilddaten des Bildes, der Bildfolge oder der Bilder auf dem Server (4) gespeichert sind und vom Server (4) zum zweiten Client (2) gesendet und dort lokal gespeichert werden.

16. Verfahren nach einem der Ansprüche 13 bis 15, **dadurch gekennzeichnet, dass** das Senden der Bilddaten des Bildes, der Bildfolge oder der Bilder vom Server (4) zum zweiten Client (2) durch ein vom ersten Client (1) generiertes und zum Server (4) gesendetes Triggersignal ausgelöst wird.

17. Verfahren nach einem der vorhergehenden Ansprüche, **dadurch gekennzeichnet, dass** zur Durchführung des Verfahrens, insbesondere zum Senden und/oder Empfangen der Triggerinformation (5) bzw. der Bestätigungsinformation (6) eine Software-Applikation auf dem jeweiligen Client (1, 2) gestartet wird.

18. Verfahren nach einem der vorhergehenden Ansprüche, **dadurch gekennzeichnet, dass** die Datenverbindung (3) mittels eines Internet-Protokolls hergestellt wird, vorzugsweise XMPP (Extensible Messaging and Presence Protocol).

19. Verfahren nach einem der vorhergehenden Ansprüche, **dadurch gekennzeichnet, dass** zusätzlich zur aufrechten Datenverbindung (3) eine Gesprächsverbindung (15) zwischen den beiden Clients (1, 2) aufrecht gehalten wird.

20. Verfahren nach Anspruch 19, **dadurch gekennzeichnet, dass** die Gesprächsverbindung (15) über ein Telefonnetz, insbesondere UMTS (Universal Mobile Telecommunications System), LTE (Long Term Evolution) oder CDMA (Code Division Multiple Access) oder andere Übertragungstechniken erfolgt.

21. Verfahren nach einem der vorhergehenden Ansprüche, **dadurch gekennzeichnet, dass** beide Clients (1, 2) mobile Clients sind, wobei die Datenverbindung (3) eine Funkübertragungsstrecke zum ersten Client (1) und eine Funkübertragungsstrecke zum zweiten Client (2) umfasst.

22. Verfahren nach einem der vorhergehenden Ansprüche, **dadurch gekennzeichnet, dass** zumindest ein Client (1, 2), vorzugsweise beide Clients (1, 2) ausgewählt ist/sind aus der Gruppe umfassend ein Mobiltelefon, einen Tablett-Computer oder ein PDA (Personal Digital Assistent), und/oder dass der erste Client (1) ein kabelgebundener Stand-Computer ist.

23. Verfahren nach einem der vorhergehenden Ansprüche, **dadurch gekennzeichnet, dass** die Eingabe-Schnittstelle (13, 14) des ersten und/oder zweiten Clients (1, 2) eine taktile Eingabeeinrichtung, insbesondere ein Touchscreen oder eine Tastatur, oder ein Mikrophon mit einer Spracherkennungssoftware ist.

24. Verfahren nach einem der vorhergehenden Ansprüche, **dadurch gekennzeichnet, dass** das auf dem Display (11) des ersten Clients (1) und auf dem Display (12) des zweiten Clients (2) synchronisiert anzuzeigende Bild bzw. Bilder (ein) Foto(s) ist/sind, und/oder dass die auf dem Display (11) des ersten Clients (1) und auf dem Display (12) des zweiten Clients (2) synchronisiert anzuzeigende Bildfolge ein Video ist.

25. Verfahren nach Anspruch 24, **dadurch gekennzeichnet, dass** die Fotos und/oder das Video mit einer Aufnahmeeinrichtung (18) des ersten Clients (1) und/oder des zweiten Clients (2) aufgenommen werden.

26. Verfahren nach einem der vorhergehenden Ansprüche, **dadurch gekennzeichnet, dass** während des synchronisierten Anzeigens eines Bildes, einer Bildfolge oder mehrerer Bilder hintereinander ein synchronisiertes Anzeigen einer Auswahlinformation (19) auf dem Display (11) des ersten Clients (1) und auf dem Display (12) des zweiten Clients (2) erfolgt, wobei die Auswahlinformation (19) zumindest einen Ausschnitt des Bildes oder der Bildfolge hervorhebt und/oder markiert und/oder auf zumindest einen Ausschnitt des Bildes oder der Bildfolge hinweist, umfassend die Schritte:
- Generieren einer Triggerinformation durch einen der Clients (1, 2) infolge einer Betätigung einer Eingabe-Schnittstelle (13, 14) des einen Clients (1, 2) durch einen Nutzer und Senden der Triggerinformation über die Datenverbindung (3) zum anderen Client (2, 1),
- Empfangen der Triggerinformation durch den anderen Client (2, 1), wobei die Triggerinformation das Anzeigen der Auswahlinformation (19) auf dem Display (12, 11) des anderen Clients (2, 1) auslöst;
wobei vorzugsweise das Verfahren weiters die Schritte umfasst:
nach dem Empfangen der Triggerinformation durch den anderen Client (2, 1), vorzugsweise sobald die Auswahlinformation (19) auf dem Display (12, 11) des anderen Clients (2, 1) angezeigt wird: automatisches Senden einer vom anderen Client (2, 1) generierten Bestätigungsinformation zu dem einen Client (1, 2), und
Empfangen der Bestätigungsinformation durch den einen Client (1, 2), wobei die Bestätigungsinformation das Anzeigen der Auswahlinformation (19), die auf dem Display (12, 11) des anderen Clients (2, 1) angezeigt wird, auf dem Display (11) des einen Clients (1, 2) auslöst.

27. System zum synchronisierten Anzeigen eines Bildes, einer Bildfolge oder mehrerer Bilder hintereinander auf dem Display (11) eines ersten Clients (1) und auf dem Display (12) eines zweiten Clients (2), wobei zumindest der zweite Client (2) ein mobiler Client ist und der erste Client (1) und der zweite Client (2) ausgebildet sind, um über eine Datenverbindung (3), die eine Funkübertragungsstrecke zum zweiten Client (2) umfasst, miteinander zu kommunizieren, **dadurch gekennzeichnet, dass** das System zur Durchführung des Verfahrens nach einem der Ansprüche 1 bis 26 ausgebildet ist.

28. Mobiler Client (2) mit einer Eingabe-Schnittstelle (14), einem Display (12), einem Speicher (9) und einem Prozessor (10), wobei der Client (2) ausgebildet ist, um über eine Datenverbindung (3), die eine Funkübertragungsstrecke umfasst, mit einem anderen Client (1) zu kommunizieren, **dadurch gekennzeichnet, dass** der Client (2) ausgebildet ist, um in einem Verfahren nach einem der Ansprüche 1 bis 26 eingesetzt zu werden, und dass der Client (2) eine Software-Applikation umfasst, die ausgebildet ist, um
- über die Datenverbindung (3) eine Triggerinformation (5) des anderen Clients (1) zu empfangen und in Abhängigkeit der Triggerinformation (5) das Anzeigen oder eine Veränderung der Anzeigeeigenschaften eines Bildes oder einer Bildfolge, dessen/deren Bilddaten im Speicher (9) des Clients (2) gespeichert sind, auf dem Display (12) des Clients (2) auszulösen, und
- nach dem Empfangen der Triggerinformation (5), vorzugsweise sobald das Bild oder die Bildfolge auf dem Display (12) des zweiten Clients (2) angezeigt wird oder dessen/deren Anzeigeeigenschaften auf dem Display (12) verändert wurden, automatisch eine Bestätigungsinformation (6) zu generieren und an den Client (1), von dem die Triggerinformation (5) stammt, zu senden.

29. Client (1), insbesondere mobiler Client, mit einer Eingabe-Schnittstelle (13), einem Display (11), einem Speicher (7) und einem Prozessor (8), wobei der Client (1) ausgebildet ist, um über eine Datenverbindung (3), die eine Funkübertragungsstrecke umfasst, mit einem anderen Client (2) zu kommunizieren, **dadurch gekennzeichnet, dass** der Client (1) ausgebildet ist, um in einem Verfahren nach einem der Ansprüche 1 bis 26 eingesetzt zu werden, und dass der Client (1) eine Software-Applikation umfasst, die ausgebildet ist, um
- infolge einer Betätigung einer Eingabe-Schnittstelle (13) des Clients (1) durch einen Nutzer eine Triggerinformation (5) zu generieren und über die Datenverbindung (3) zu einem anderen Client (2) zu senden, und
- eine Bestätigungsinformation (6) vom anderen Client (2), an den die Triggerinformation (5) gesendet wurde, zu empfangen und in eine optische und/oder akustische und/oder taktile Information umzuwandeln.

30. Client nach Anspruch 29, **dadurch gekennzeichnet, dass** die Software-Applikation dazu ausgebildet ist, um die Bestätigungsinformation (6) in eine optische Information umzuwandeln, wobei das Anzeigen oder eine Veränderung der Anzeigeeigenschaften desselben Bildes oder derselben Bildfolge, das bzw. die auf dem Display (12) des anderen Clients (2) angezeigt wird, auf dem Display (11) des Clients (1) ausgelöst wird.

31. Client nach einem der Ansprüche 28 bis 30, **dadurch gekennzeichnet, dass** der Client (1, 2) ausgebildet ist, um während der Kommunikation über die Datenverbindung (3) zusätzlich über eine Telefonverbindung, insbesondere über UMTS (Universal Mobile Telecommunications System), LTE (Long Term Evolution) oder CDMA (Code Division Multiple Access) oder andere Übertragungstechniken, mit dem anderen Client (2, 1) zu kommunizieren.
